(19) Europäisches Patentamt
European Patent Office
Office européen des brevets

(11) Publication number: **0 019 997**
**A1**

# (12) EUROPEAN PATENT APPLICATION

(21) Application number: **80301089.1**

(22) Date of filing: **03.04.80**

(51) Int. Cl.³: **C 09 B 23/04**, D 21 H 3/80

(30) Priority: **05.04.79 US 27458**

(43) Date of publication of application: **10.12.80**
**Bulletin 80/25**

(84) Designated Contracting States: **AT BE CH DE FR GB IT LI LU NL SE**

(71) Applicant: **AMERICAN COLOR & CHEMICAL CORPORATION, 6525, Morrison Boulevard, Charlotte North Carolina 28232 (US)**

(72) Inventor: **Desai, Kishor A., 12 Country Club Drive, Ledyard Connecticut 06339 (US)**

(74) Representative: **Abrams, Michael John et al, Haseltine Lake & Co. 28, Southampton Buildings Chancery Lane, London WC2A 1AT (GB)**

## (54) Cationic alpha-cyano cinnamoyl dyes, their use and coloured paper dyed therewith.

(57) Novel cationic α-cyano cinnamoyl dyes have the general formula

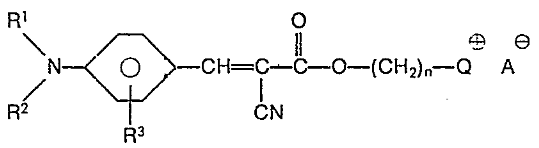

(3)

in which
$R^1$ is an alkyl or substituted alkyl group;
$R^2$ is a benzyl or substituted benzyl group;
$R^3$ is hydrogen, an alkyl or alkoxy group, or a halogen atom;
n is 2, 3 or 4;
Q is a radical containing a quaternary nitrogen atom; and
A is an anion.

The dyes are particularly useful in the dyeing of unbleached paper pulp. They have excellent substantivity and desired fastness properties.

EP 0 019 997 A1

TITLE MODIFIED
see front page



"CATIONIC α-CYANO CINNAMOYL DYES"

This invention relates to cationic α-cyano cinnamoyl dyes and is particularly but not exclusively concerned with such dyes which are suitable for colouring paper and have an excellent affinity for unbleached paper pulp.

Green-yellow pendant cationic dyes for paper are disclosed in United States Patent No.3,742,012 (Bauman) as having the structure

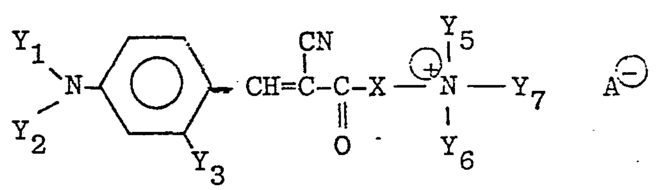

(1)

wherein each of $Y_1$ and $Y_2$ is lower alkyl or cyanoethyl, $Y_3$ is H,methyl, methoxy or chloro, X is -O-alkylene or -NH-alkylene, $Y_5$ is lower alkyl, $Y_6$ is lower alkyl or cyclohexyl, $Y_7$ is lower alkyl or benzyl and A is an anion. Such dyes are stated to possess good substantivity on paper.

Dyes which are structurally similar to those of Bauman, but which are stated to have better storage stability in aqueous acetic acid at temperatures of about 50°C are disclosed in United States Patent No.4,017,486 (Buell et al).

The dyes of Buell et al are represented by the structure:

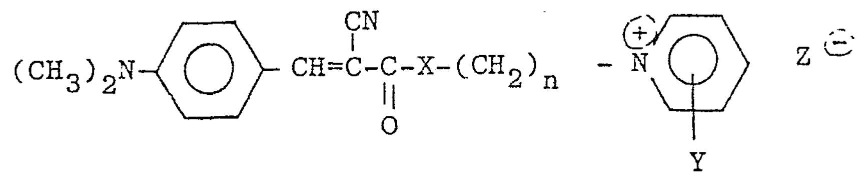 (2)

wherein Y is hydrogen or methyl, X is O or NH, n is 2 or 3 and Z is an anion which is halide or methosulphate.

A problem associated with dyes of all kinds is that not all the dye used in any particular dyeing process is taken up by the material to be dyed, but rather some of the dye is discharged with the waste products of the process. In particular, environmental problems are generally associated with the discharge of so-called whitewater from processes for dyeing paper pulp. Accordingly it is desirable to provide dyes of even greater substantivity than those of Bauman and Buell et al in order to alleviate such environmental problems.

According to the present invention there is provided a dye characterised by the general formula

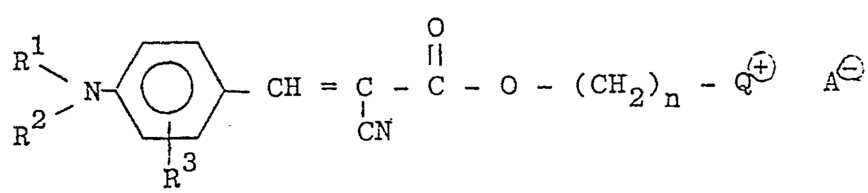 (3)

in which

$R^1$ is an alkyl or substituted alkyl group;

$R^2$ is a benzyl or substituted benzyl group;

$R^3$ is hydrogen, an alkyl or alkoxy group, or a halogen atom;

n is 2, 3 or 4;

Q is a radical containing a quaternary nitrogen atom; and

A is an anion.

The novel cationic α-cyano cinnamoyl dyes of the invention have been found to have an excellent affinity for unbleached paper pulp which permits almost complete

utilization of colour and results in an essentially uncoloured whitewater discharge.

The alkyl group $R^1$ of formula (3) preferably contains from 1 to 4 carbon atoms. When $R^1$ represents a substituted alkyl group this may be, for example a cyano alkyl, hydroxy alkyl or acetylated hydroxy alkyl group.

In formula (3), $R^2$ may be a substituted benzyl group, the nucleus preferably carrying a maximum of two substituents which may be, for example, an alkyl group such as methyl or ethyl, a nitro group, a chlorine atom or a bromine atom.

The ring substituent $R^3$ of formula (3) may simply be hydrogen; in the case where $R^3$ represents other than hydrogen it is preferably in the ortho position relative to the cinnamoyl carbon chain. $R^3$ may be an alkyl group such as methyl, an alkoxy group such as methoxy or ethoxy, or a halogen atom such as chlorine.

It is preferred that the radical Q containing the quaternary nitrogen is $-N(CH_3)_3$,

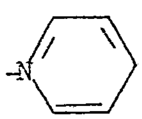 , 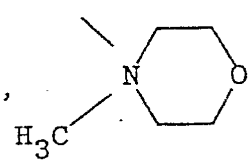 or 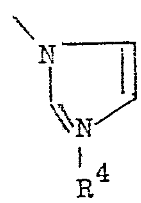

wherein $R^4$ is an alkyl, benzyl or substituted benzyl group. The alkyl group preferably contains from 1 to 4 carbons, whilst the substituted benzyl group is preferably monochlorobenzyl or monobromobenzyl.

The anion A of formula (3) is preferably chloride, bromide, methosulphate, ethosulphate or acetate. Anions other than these may also be utilized.

BAD ORIGINAL

the nature of the anion being chosen, for example, according to the desired degree of solubility as will be appreciated by those skilled in the art.

The dyes of the invention are bright greenish yellow dyes which generally provide clean, bright solutions and have excellent affinity for paper pulp.

Preferred dyes according to the invention are those wherein $R^1$ is $C_2H_5$, $R^2$ is benzyl, n is 2, Q is $N(CH_3)_3$, $R^3$ is H or $CH_3$ and the anion A is preferably Cl or $OCOCH_3$. These cationic yellow methine dyes have been found to possess excellent affinity to unbleached paper pulp and to have good water solubility and storage stability.

The cationic dyes according to the invention may be prepared according to the general procedures described in the <u>Bauman</u> patent by reacting an aromatic aldehyde having the formula:

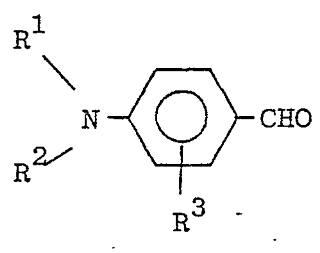

(4)

where $R^1$, $R^2$ and $R^3$ are as defined above, with an ester or amide of cyanoacetic acid of the formula:

$$CN - CH_2\overset{O}{\overset{\|}{C}}-O-(CH_2)_n - Q^{\oplus}\ A^{\ominus} \qquad (5)$$

wherein Q, n and A are as defined above. Generally, the compound of the formula (5) may be prepared by reacting cyanoacetic acid with acetic anhydride to form a mixed anhydride in situ and reacting the latter with a compound of the formula:

$$H-O-(CH_2)_n - Q^{\oplus}\ A^{\ominus} \qquad (6)$$

The resultant ester product is then condensed in situ with the aromatic aldehyde of formula (4). The reaction product is conveniently diluted with water to obtain a solution of the desired dye in acetic acid. Alternatively, the dye may be isolated and subsequently dissolved, prior to use, in an aqueous solution of acetic acid or formic acid.

The dyes of the invention are particularly suitable for use as agents for dyeing paper furnish.

The following Examples illustrate the invention; where appropriate, parts and percentages are by weight.

## EXAMPLE 1

Preparation of the α-cyano-p-(N-benzyl-N-ethylamino) cinnamate of 1-(2-hydroxyethyl)trimethyl ammonium chloride.

19.3 parts of acetic anhydride were added to 5.4 parts of cyanoacetic acid and the reaction mixture was heated to 50°C and maintained at this temperature for two hours. The reaction mixture was subsequently cooled to 40°C and to it were added 9.7 parts of choline chloride; the resulting reaction mixture was heated to 65°C and maintained at this temperature for two hours. To this mixture were added 14.7 parts of p-(N-benzyl-N-ethylamino)benzaldehyde, and the resultant mixture was slowly heated to 90° -95°C and maintained at this temperature for six hours. 8.5 Parts of water were subsequently added, and a temperature of 40°C was maintained for one hour. The mixture was then cooled to room temperature and 8.1 parts of formic acid were added. The resulting liquid dye was found to be miscible with water in all proportions and to have storage stability in excess of one year.

The aqueous solution of the dye was found to absorb in the visible region and had a maximum absorption wavelength (λ max) at 440 nm.

BAD ORIGINAL

Based on the above procedure, the structure of the product dye is:

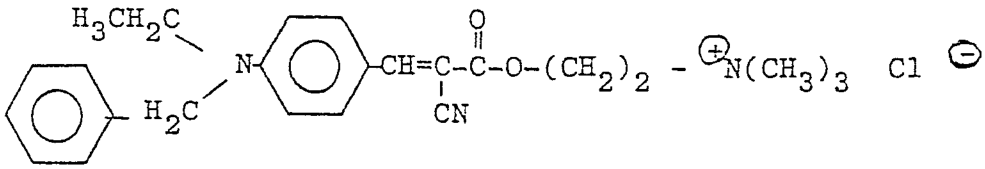 (7)

The dye isolated from the liquid solution has a melting point of 94-96 degree C and gave the following results on elemental analysis:

Calculated: C 67.35, H 7.06, N 9.82, O 7.48, Cl 8.28

Found: C 67.1, H 7.1, N 9.6, O 7.5, Cl 8.4.

An infra red analysis of the isolated dye was non-descriptive of the structure and did not yield a spectrum typical of the functional groups, but was more typical of a salt.

Preparation of a liquid solution of the alpha-cyano-3-methyl -4-(N-benzyl-N-Ethylamino) cinnamate of 1-(2-hydroxyethyl) Trimethylammonium chloride was carried out employing the procedure described above but employing 15.6 parts of 3-methyl-4-(N-benzyl-N-ethyl-amino) benzaldehyde in lieu of the 14.7 parts of p-(N-benzyl-N-ethyl-amino) benzaldehyde. The resulting liquid dye was also found to be miscible in water in all proportions and to have storage stability in excess of one year.

The aqueous solution of the dye absorbs in the visible region and shows the maximum absorption wavelength (lambda max) at 450 nm.

Based on the above procedure, the structure of the dye is:

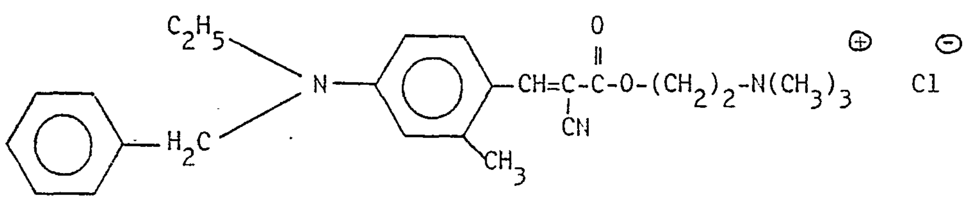

The dye isolated from the liquid solution has a melting point of 59-62 degree C (decomposed) and gave the following results on elemental analysis:

Calculated: C 67.93, H 7.29, N 9.51, O 7.24, Cl 8.21

Found: C 68.2, H 7.1, N 9.3, O 7.0, Cl 8.3.

An infra red analysis of the isolated dye was also non-descriptive of the structure.

EXAMPLE 2

To evaluate the substantivity of dyes according to the invention as compared with structurally similar dyes of the Bauman and Buell et al patents, four samples of Groundwood Printing and Specialty Furnish were each dyed by the method described below. The respective dyes employed each had the general structure:

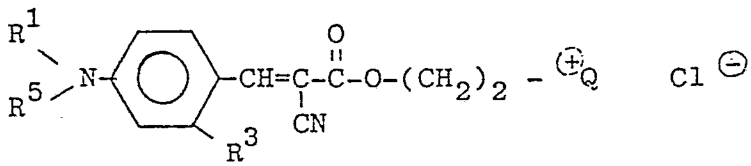 (8)

and are defined in Table I.

TABLE I

| Dye No. | $R^1$ | $R^5$ | $R^3$ | Q |
|---|---|---|---|---|
| 1 | $C_2H_5$ | 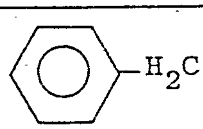 | H | $N(CH_3)_3$ |
| 2 | $C_2H_5$ | 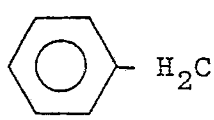 | $CH_3$ | $N(CH_3)_3$ |
| 3 | $C_2H_5$ | $C_2H_5$ | H | $N(CH_3)_3$ |
| 4 | $CH_3$ | $CH_3$ | H | 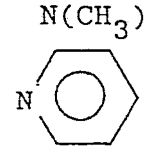 |

Dye No 3 is that defined in claim 2 of U.S Patent No.3,742,012 (Bauman) and dye No. 4 is that defined in claim 3 of U.S Patent No.4,017,486 (Buell et al).

In dyes 1 and 2 the group $R^5$ of course corresponds to $R^2$ of general formula (3). To test dye No. 1, 1000 parts of Groundwood Printing & Specialty Furnish (a) which contained 85% groundwood and 15% bleached kraft pulp, were dispersed in 45000 parts of water. 10 Parts of dye No.1 and 10 parts of alum (commercial aluminium sulphate, $Al_2(SO_4)_3 \cdot 18\ H_2O$) were then added and the mixture was agitated for about 10 minutes. Conventional means were then used to form a paper sheet which was found to be dyed a green-yellow shade. Three further dyed paper sheets were produced in a similar manner but using equivalent quantities of dyes No. 2, 3 and 4 respectively. In each case greenish yellow dyeings of comparable strength were obtained. The amounts of dye in whitewater samples taken from each of the above dyeing processes, as a percentage of the total amount of dye added in each case, were visually estimated by comparison with diluted samples of the original dye solutions; results were as follows:

| Dye No | Dye in Whitewater |
|---|---|
| 1 | 15 - 20% |
| 2 | 20% |
| 3 | 75% |
| 4 | 85% |

A further series of four tests was carried out without the incorporation of alum. Thus in each test 1000 parts of groundwood printing and specialty furnish of the same make-up as (a) were dispersed in 45000 parts of water and 10 parts of the respective dye were applied to the furnish. Again, each mixture produced was agitated for about 10 minutes and paper sheets were then formed by conventional procedures to yield four paper samples which were dyed a green yellow shade. A whitewater

BAD ORIGINAL

sample was taken from each dyeing and was visually estimated as described above, with the following results:

| Dye No. | Dye in Whitewater |
|---|---|
| 1 | 10 - 15% |
| 2 | 5 - 10% |
| 3 | 50% |
| 4 | 50 - 55% |

Although the percentage of dye remaining in the whitewater will vary depending for example on the composition of the pulp and the dyeing procedures adopted, it may be deduced that in paper dyeings, dyes according to the invention as exemplified above have significantly better affinity and produce whitewater containing significantly lower amounts of dye than some commercial dyes of similar structure.

CLAIMS:

1. A dye characterised by the general formula

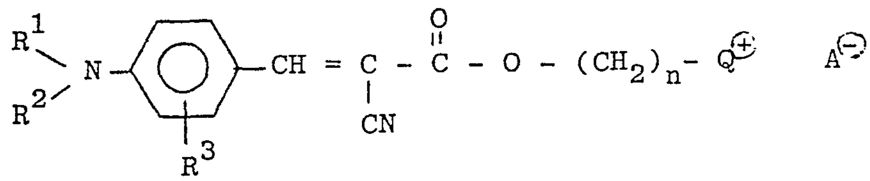

(3)

in which

$R^1$ is an alkyl or substituted alkyl group;

$R^2$ is a benzyl or substituted benzyl group;

$R^3$ is hydrogen, an alkyl or alkoxy group, or a halogen atom;

n is 2, 3 or 4;

Q is a radical containing a quaternary nitrogen atom; and

A is an anion.

2. A dye as defined in claim 1 characterised in that the substituted alkyl group $R^1$ is cyano alkyl, hydroxy alkyl or acetylated hydroxyalkyl.

3. A dye as defined in claim 1 or 2 characterised in that $R^2$ is a substituted benzyl group carrying, as substituent, a methyl, ethyl or nitro group or a chlorine or bromine atom.

4. A dye as defined in claim 1, 2 or 3 characterised in that $R^3$ is a methyl, methoxy or ethoxy group, or a chlorine atom.

5. A dye as defined in claim 1, 2, 3 or 4 characterised in that Q is $-N(CH_3)_3$,

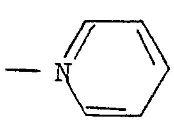 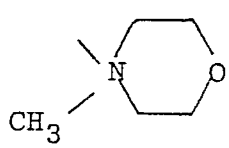 or 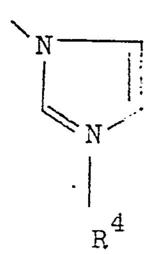

where $R^4$ is an alkyl, benzyl or substituted benzyl group.

6. A dye characterised by the formula:

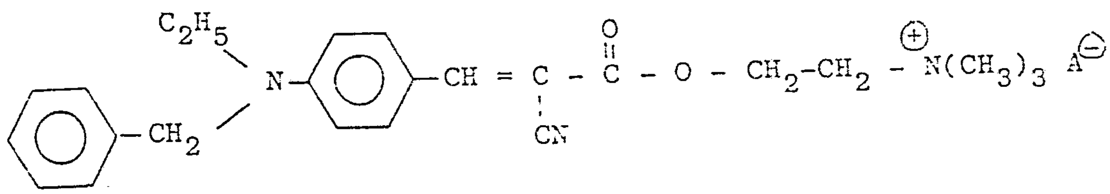

(9)

where A is an anion.

7. A dye characterised by the formula

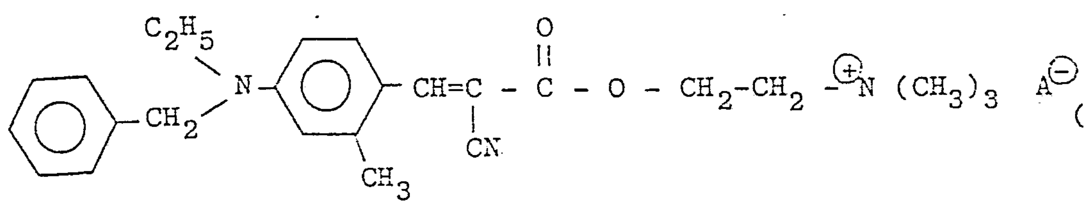

(10)

where A is an anion.

8. A dye as defined in any one of the preceding claims characterised in that the anion A is chloride, bromide, methosulphate, ethosulphate or acetate.

9. A dye as claimed in any preceding claim, characterised in that the group $R^1$ is an alkyl group of 1 to 4 carbon atoms or a substituted alkyl group of 1 to 4 carbon atoms (preferably cyano-substituted).

10. A dye as claimed in any preceding claim, characterised in that the group $R^2$ is a substituted benzyl group carrying not more than two substituents.

11. The use of a dye as defined in claim 1 as agent for dyeing paper furnish.

12. Coloured paper when formed from furnish dyed in accordance with the use defined in claim 9.

BAD ORIGINAL

European Patent Office

# EUROPEAN SEARCH REPORT

Application number EP 80301089.1

| Category | DOCUMENTS CONSIDERED TO BE RELEVANT — Citation of document with indication, where appropriate, of relevant passages | Relevant to claim | CLASSIFICATION OF THE APPLICATION (Int. Cl.) |
|---|---|---|---|
| | DE - A - 2 301 495 (DU PONT)<br>+ Claims 1,2; page 1, lines 8, 9; page 5, lines 4-6,24,25 +<br>-- | 1,2,4, 5,8,9, 11,12 | C 09 B 23/04<br>D 21 H 3/80 |
| | DE - A1 - 2 747 365 (AMERICAN CYANAMID)<br>+ Claim 1 +<br>-- | 1,5,8, 9,11, 12 | |
| | CH - A - 438 545 (BAYER)<br>+ Claim +<br>-- | 1 | TECHNICAL FIELDS SEARCHED (Int.Cl.) |
| | FR - A - 2 170 618 (SUMITOMO)<br>+ Claims 1-3 +<br>-- | 1,2,9 | C 09 B<br>D 21 H |
| | US - A - 3 917 604 (HOYLE)<br>+ Claims 1,2,4,5 +<br>---- | 1,4,9 | |

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons
&: member of the same patent family, corresponding document

The present search report has been drawn up for all claims

| Place of search | Date of completion of the search | Examiner |
|---|---|---|
| VIENNA | 04-07-1980 | SCHÄFER |